# EUROPÄISCHE PATENTSCHRIFT

(11) **EP 2 978 336 B1**
(45) Veröffentlichungstag und Bekanntmachung des Hinweises auf die Patenterteilung: **15.08.2018**
(21) Anmeldenummer: 14714671.6
(22) Anmeldetag: 28.03.2014
(51) Int. Cl.: A45C 5/02, A45C 13/08, A45C 5/03, A45C 1/06, B32B 9/02, B32B 9/04, B32B 3/30

(54) **GEPÄCKSTÜCK ODER BRIEFTASCHE MIT DREIDIMENSIONALEN ERHÖHUNGEN**
LUGGAGE OR WALLET WITH THREE-DIMENSIONAL ELEVATIONS
BAGAGE OU PORTEFEUILLE À ÉLÉVATIONS TRIDIMENSIONNELLES

(30) Priorität: 28.03.2013 DE 202013002981 U
(43) Veröffentlichungstag der Anmeldung: 03.02.2016
(73) Patentinhaber: RIMOWA GmbH, 50829 Köln (DE)
(72) Erfinder: MORSZECK, Dieter, 50829 Köln (DE)
(74) Vertreter: dompatent von Kreisler Selting Werner - Partnerschaft von Patent- und Rechtsanwälten mbB
(86) Internationale Anmeldenummer: PCT/EP2014/056286
(87) Internationale Veröffentlichungsnummer: WO 2014/170116

(56) Entgegenhaltungen:
- DE-U1-202005 012 291
- US-A- 4 703 519
- US-A1- 2006 048 413

## Beschreibung

Die Erfindung betrifft ein Gepäckstück oder Brieftasche mit dreidimensionalen Erhöhungen nach dem Oberbegriff des Anspruchs 1.

Es existieren Aufbewahrungseinrichtungen, insbesondere Koffer mit dreidimensionalen Erhöhungen. Diese dreidimensionalen Erhöhungen werden zum Beispiel bei Hartschalenkoffern bei der Herstellung in die Form der Schalen eingebracht.

Es besteht jedoch Bedarf, die dreidimensionalen Erhöhungen einfach und kostengünstig herzustellen.

DE 20 2005 012 291 U1 offenbart einen Koffer bestehend aus, mindestens zwei jeweils eine Außenseite und eine Innenseite aufweisenden Kofferschalenteilen, die gelenkig miteinander verbunden sind und einer Schließeinrichtung zum Halten der Kofferschalenteile in Schließstellung, wobei die Kofferschalenteile jeweils aus einem einteiligen Schalenelement aus dünnem flexiblem Kunststoffmaterial bestehen, wobei die Außenseiten der Kofferschalenteile mit einer textilen Schicht versehen sind, wobei die textile Schicht jeweils zumindest an den Rändern des Kofferschalenteils befestigt ist.

Der Erfindung liegt somit die Aufgabe zugrunde auf einfache und kostengünstige Art und Weise dreidimensionale Erhöhungen auf die Außenfläche von Gepäckstücken oder Brieftaschen aufzubringen. Zur Lösung dieser Aufgabe dienen die Merkmale des Anspruchs 1.

Die Erfindung sieht in vorteilhafter Weise vor, dass auf der Außenfläche eine zusätzliche Außenschicht angeordnet ist, die mindestens eine mittels eines Thermoform-Verfahrens eingebrachte und von der Außenfläche abstehende
dreidimensionale Erhöhung aufweist, wobei auf der Außenfläche mindestens eine der Form der mindestens einen dreidimensionalen Erhöhung angepasste Erhebung angeordnet ist, wobei die Außenschicht derart auf der Außenfläche angeordnet ist, dass die mindestens eine auf der Außenfläche angeordnete dreidimensionale Erhebung unterhalb der mindestens einen dreidimensionalen Erhöhung der Außenschicht angeordnet ist.

Die vorliegende Erfindung hat den Vorteil, dass die dreidimensionalen Erhöhungen einfach und kostengünstig herzustellen sind, wobei die Form der dreidimensionalen Erhöhungen beliebig variierbar ist.

Ferner hat die vorliegende Erfindung den Vorteil, dass die dreidimensionale Erhöhung auch nicht bei Krafteinwirkung eingedrückt werden kann.

Auf diese Weise erhält die dreidimensionale Erhöhung für lange Zeit dieselbe Kontur.

Die zumindest eine dreidimensionale Erhöhung kann rippenförmig ausgestaltet sein.

Die Außenschicht kann aus Kunststoff, Leder oder einem Textilstoff bestehen. Die Außenschicht kann mittels einer Klebeschicht auf der Außenfläche aufgebracht sein. Die dreidimensionale Erhöhung kann im Querschnitt eine Dreiecksform aufweisen.

Die mindestens eine auf der Außenfläche angeordnete dreidimensionale Erhebung kann zwei aufeinander angeordnete und miteinander verbundene Schichten aufweisen.

Die mindestens zwei Schichten können auf die Außenfläche gedruckt sein. Dies hat den Vorteil, dass die Schichten einfach und kostengünstig auf der Außenfläche aufbringbar sind. Ferner kann die Breite und die Form der Schichten variieren, so dass die Form der dreidimensionalen Erhebung variabel ist. Auf diese Weise kann die Form der dreidimensionalen Erhebung leicht der dreidimensionalen Erhöhung der Außenschicht angepasst werden.

Die Schichten können mittels eines 3D-Druckverfahren oder eines Siebdruckverfahrens hergestellt werden.

Ferner kann ein Verfahren zum Herstellen eines Gepäckstücks vorgesehen sein, dass die folgende Schritte aufweist:
- Herstellen eines Gepäckstücks mit mindestens einer Außenfläche,
- Herstellen zumindest einer zusätzlichen Außenschicht,
- Einbringen von rippenförmigen Erhöhungen in die zusätzliche Außenschicht mittels Thermoformen,
- Befestigen, vorzugsweise Kleben, der Außenschicht auf der zumindest einen Außenfläche.

Im Folgenden werden unter Bezugnahme auf die Zeichnungen Beispiele von Aufbewahrungseinrichtungen näher erläutert.

Es zeigen schematisch:
- Fig. 1: eine als Gepäckstück ausgebildete Aufbewahrungseinrichtung mit dreidimensionaler Erhöhungen auf der Außenfläche,
- Fig. 2: eine als Tasche ausgebildete Aufbewahrungseinrichtung,
- Fig. 3: die Aufbewahrungseinrichtung aus Fig. 2 in der Seitenansicht,
- Fig. 4: dreidimensionale Erhöhungen auf der Außenfläche einer Aufbewahrungseinrichtung in der Seitenansicht,
- Fig. 5: ein alternatives Beispiel,
- Fig. 6: das Beispiel aus Fig. 4 mit der Seitenansicht,
- Fig. 7: ein alternatives Beispiel,
- Fig. 8: ein Ausführungsbeispiel gemäß der Erfindung,
- Fig. 9: Thermoformanlage für die Einbringung von dreidimensionalen Erhöhungen in der Außenschicht.

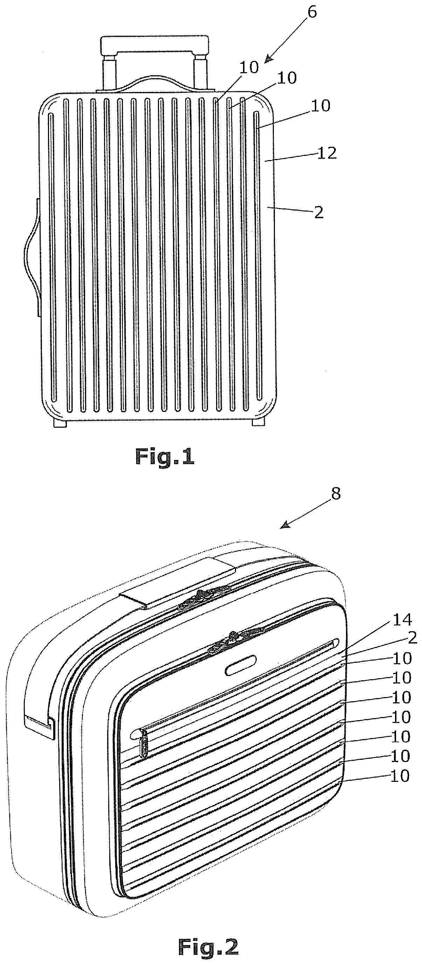

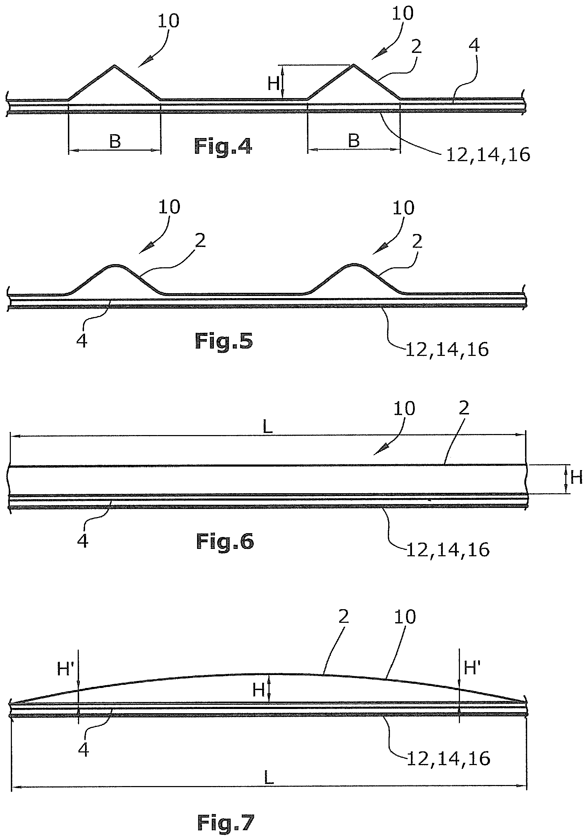

Fig. 1 zeigt eine als Koffer 6 ausgestaltete Aufbewahrungseinrichtung. Der Koffer 6 ist ein Gepäckstück. Der Koffer 6 weist zumindest eine Außenfläche 12 auf, wobei auf der Außenfläche eine zusätzliche Außenschicht 2 angeordnet ist, die mittels eines Thermoformverfahrens eingebracht und von der Außenfläche 12 abstehende dreidimensionale Erhöhungen 10 aufweist. Die dreidimensionalen Erhöhungen 10 sind rippenförmig ausgestaltet. Die Ausgestaltung der dreidimensionalen Erhöhungen ist in den Figuren 4 - 8 näher dargestellt. Der Koffer kann ein Hartschalenkoffer, insbesondere aus Aluminium oder Kunststoff (z. B. PE) sein.

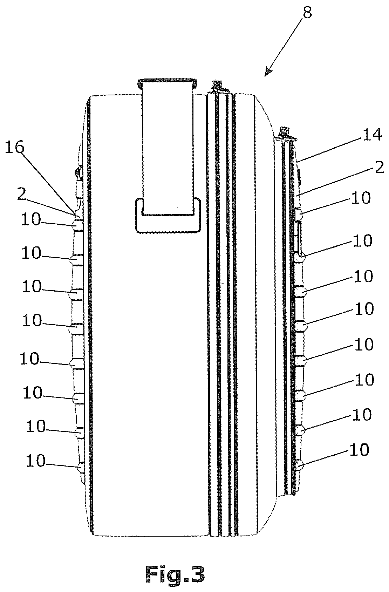

Fig. 2 zeigt eine als Tasche 8 ausgebildete Aufbewahrungseinrichtung. Die Tasche 8 weist zumindest eine Außenfläche 14 und eine Außenfläche 16 auf, die die Vorder- bzw. die Rückseite der Tasche 8 bilden. Auf zumindest einer Außenfläche 14, 16 sind abstehende dreidimensionale Erhöhungen 10 angeordnet. Diese dreidimensionalen Erhöhungen 10 sind mittels eines Thermoformverfahrens in eine Außenschicht eingebracht, die auf der Außenfläche 14, 16 angeordnet ist. Die dreidimensionalen Erhöhungen 10 sind rippenförmig ausgestaltet. Es sind eine Vielzahl von dreidimensionalen Erhöhungen 10 auf den Außenflächen 14 und 16 angeordnet, wobei diese parallel nebeneinander verlaufen. In Fig. 3 ist die Tasche 8 in der Seitenansicht dargestellt. Die dreidimensionalen Erhöhungen sind in den Figuren 1 -3 nur schematisch dargestellt.

Die in den Figuren 1, 2 und 3 dargestellten Aufbewahrungseinrichtungen, d. h. der Koffer 6 und die Tasche 8, können jeweils nur auf einer Außenfläche 12, 14 dreidimensionale Erhöhungen 10 aufweisen. Alternativ können der Koffer 6 und die Tasche 8 auch auf zwei oder mehr Außenflächen 12, 14, 16 dreidimensionale Erhöhungen 10 aufweisen.

Bevorzugt weist der Koffer 6 aus Fig. 1 auf allen Außenflächen dreidimensionale Erhöhungen auf.

Vorzugsweise sind auf den jeweiligen Außenflächen 12, 14, 16 mehrere dreidimensionale Erhöhungen 10 angeordnet, wobei diese dreidimensionale Erhöhungen 10 vorzugsweise rippenförmig ausgebildet sind und die rippenförmigen dreidimensionalen Erhöhungen 10 sind vorzugsweise parallel nebeneinander und im gleichmäßigen Abstand voneinander angeordnet. Die dreidimensionalen Erhöhungen 10 können auch auf der Außenfläche eines Portemonnaies angeordnet sein.

Die Ausgestaltung der dreidimensionalen Erhöhungen 10 der Aufbewahrungseinrichtung aus den Figuren 1 - 3 sind in den Figuren 4 - 8 näher dargestellt.

In Fig. 4 sind dreidimensionale Erhöhungen 10 dargestellt. Die dreidimensionalen Erhöhungen 10 sind mittels eines Thermoformverfahrens in einer Außenschicht 2 eingebracht worden. Dreidimensional bedeutet, dass die Erhöhungen eine Breite B, eine Länge L und eine Höhe H aufweisen. Die Außenschicht 2 ist mittels einer Klebeschicht 4 auf den jeweiligen Außenflächen 12, 14, 16 aufgebracht. Mittels des Thermoformverfahrens kann die Form der in die Außenschicht 2 eingebrachten dreidimensionalen Erhöhungen beliebig variiert werden. In Fig. 4 sind dreidimensionale rippenförmige Erhöhungen 10 dargestellt, die in Querschnitt eine dreiecksförmige Querschnittsfläche aufweisen. Die Höhe der dreidimensionalen Erhöhung verändert sich somit über die Breite B. Die dreidimensionale Erhöhung 10 läuft konisch zu. Die dargestellten dreidimensionalen Erhöhungen 10 sind hohl. Die Außenschicht 2 kann aus Kunststoff, Leder oder einen Textilstoff bestehen.

Die dreidimensionalen Erhöhungen 10 können jedoch auch jede beliebige andere Form aufweisen. In Fig. 5 sind dreidimensionale Erhöhungen 10 dargestellt, die an der Spitze abgerundet sind.

In Fig. 6 sind die dreidimensionale Erhöhungen 10 aus Fig. 4 in der Seitenansicht dargestellt. Die dreidimensionale Erhöhung 10 des in Fig. 6 dargestellten Ausführungsbeispiels weist über die Länge L eine konstante Höhe H auf.

In Fig. 7 ist ein Ausführungsbeispiel dargestellt, bei dem die dreidimensionale Erhöhung 10 über die Länge L in der Höhe H variiert. In den Randbereichen wird die Höhe H immer geringer und läuft zu den Randbereichen hin aus.

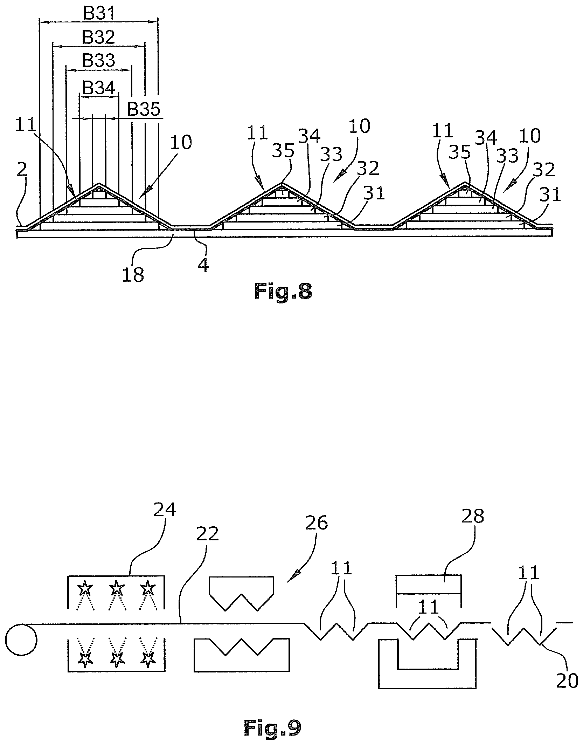

In Fig. 8 ist ein Ausführungsbeispiel gemäß der Erfindung dargestellt. In diesem Fall sind auf der Außenfläche 12, 14, 16 der Form der mindestens einen dreidimensionalen Erhöhung 10 angepasste Erhebungen 11 angeordnet, wobei die Außenschicht 2 derart auf der Außenfläche 12, 14, 16 angeordnet ist, dass die mindestens eine auf der Außenfläche 12, 14, 16 angeordnete dreidimensionale Erhebung 11 unterhalb der mindestens einen dreidimensionalen Erhöhung 10 der Außenschicht 2 angeordnet ist.

Die auf der Außenfläche 12, 14, 16 angeordneten dreidimensionalen Erhebungen 11 weisen jeweils mindestens zwei aufeinander angeordnete und miteinander verbundene Schichten auf.

Die aufeinander angeordneten und miteinander verbundenen Schichten 31 - 35 können beispielsweise mittels eines Druckverfahrens auf der Außenfläche 14, 16, 12 angeordnet werden. Dazu wird eine erste Schicht 31 auf die Außenfläche 12, 14, 16 gedruckt. Diese erste Schicht 31 bildet die unterste Schicht und ist die an die Außenfläche 12, 14, 16 angrenzende Schicht. Anschließend wird eine zweite Schicht 32 auf die erste Schicht 31 gedruckt. Auf die zweite Schicht 32 wird wiederum die dritte Schicht 33, auf die dritte Schicht 33 wird die vierte Schicht 34 und auf die vierte Schicht 34 wird die fünfte Schicht 35 gedruckt. Die fünfte Schicht 35 bildet in dem dargestellten Ausführungsbeispiel die oberste Schicht und ist die von der Außenfläche 12, 14, 16 am weitesten entfernteste Schicht. Die dreidimensionale Erhebung kann auch eine andere Anzahl von Schichten aufweisen.

Dadurch, dass die Schichten 31 - 35 auf die Außenfläche 12, 14, 16 gedruckt werden und die dreidimensionale Erhebungen 11 aus mehreren Schichten 31 - 35 bestehen, kann die dreidimensionale Erhebung jede beliebige Form aufweisen. Auf diese Weise können in einem Produktionsprozess die Form und die Ausgestaltung der dreidimensionalen Erhebung beliebig verändert und an die dreidimensionale Erhöhung 10 angepasst werden.

In dem Ausführungsbeispiel gemäß Fig. 8 sind jeweils fünf Schichten aufeinander angeordnet. Die Schichten 31 - 35 variieren in der Breite B31 bis B35. Die Breite B31 der Schicht 31, die der Außenfläche 12, 14, 16 anliegend angeordnet ist, weist die breiteste Breite B31 auf. Die Breite B35 der Schicht 35, die die der Außenfläche 12, 14, 16 am weitesten entfernteste Schicht ist, weist die geringste Breite B35 auf. Die Breiten B32 - B34 der Schichten 32 - 34, die zwischen den Schichten 31 und 35 liegen, variieren in der Breite zwischen den Breiten B31 und B35, so dass die dreidimensionalen Erhebungen 11 konisch zulaufend sind und den dreidimensionalen Erhöhungen 10 der Außenschicht 2 angepasst sind. Auch können die Längen L der Schichten und Dicken D der Schichten variieren. Die Außenschicht 2 ist auf der Außenfläche 12, 14, 16 und auf den dreidimensionalen Erhebungen 11 mittels einer Klebeschicht 4 aufgebracht.

Anhand der Fig. 9 kann erläutert werden, wie mittels eines Thermoformverfahrens die dreidimensionalen Erhöhungen 10 in die Außenschicht 2 eingebracht werden. Ein bahnförmiger Stoff 22 kann von einer Rolle abgewickelt werden und in einem Heizofen 24 erwärmt werden. Nach dem Erwärmen in dem Heizofen 24 wird die bahnförmige Schicht 22 in eine Formgebungseinrichtung 26 eingeführt, in der die dreidimensionalen Erhöhungen, insbesondere die rippenförmigen dreidimensionalen Erhöhungen in die bahnförmige Schicht eingebracht werden. Dies erfolgt mittels einer Presseinrichtung, die die Form der dreidimensionalen Erhöhungen aufweist. Nach der Formgebungseinrichtung 26 wird in einer Stanzeinrichtung 28 die bahnförmige Schicht in Einzelsegmente unterteilt, so dass die Außenschicht 2 gebildet wird. Die Außenschicht 2 weist die Außenabmessungen der Außenflächen 12, 14, 16 auf.

Alternativ kann bei einem Thermoformverfahren anstelle der bahnförmigen Schicht auch Plattenware verwendet werden, wobei die Plattenware bereits die Abmessungen der jeweiligen Außenfläche 12, 14, 16 aufweist. Diese Plattenwaren werden dann erwärmt und geformt.

Somit werden bei dem Verfahren zum Herstellen eines Gepäckstücks die folgenden Schritte ausgeführt:
- Herstellen eines Gepäcksstücks mit mindestens einer Außenfläche,
- Herstellen von zumindest einer zusätzlichen Außenschicht 2,
- Einbringen von rippenförmigen Erhöhungen 10 in die zusätzliche Außenschicht 2 mittels Thermoformen und
- Befestigen, vorzugsweise Kleben der Außenschicht auf der zumindest einen Außenfläche.

## Patentansprüche

1. Gepäckstück oder Brieftasche, mit
- zumindest einer Außenfläche (12, 14, 16),
wobei auf der Außenfläche (12, 14, 16) eine zusätzliche Außenschicht (2) angeordnet ist, wobei die zusätzliche Außenschicht mindestens eine mittels eines Thermoform-Verfahrens eingebrachte und von der Außenfläche (12, 14, 16) abstehende dreidimensionale Erhöhung (10) aufweist, **dadurch gekennzeichnet, dass** auf der Außenfläche (12, 14, 16) mindestens eine der Form der mindestens einen dreidimensionalen Erhöhung (10) angepasste Erhebung (11) angeordnet ist, wobei die Außenschicht (2) derart auf der Außenfläche (12, 14, 16) angeordnet ist, dass die mindestens eine auf der Außenfläche (12, 14, 16) angeordnete dreidimensionale Erhebung (11) unterhalb der mindestens einen dreidimensional Erhöhung (10) der Außenschicht (2) angeordnet ist.

2. Gepäckstück oder Brieftasche nach Anspruch 1, **dadurch gekennzeichnet, dass** die zumindest eine dreidimensionale Erhöhung (10) rippenförmig ausgestaltet ist.

3. Gepäckstück oder Brieftasche nach Anspruch 1 oder 2, **dadurch gekennzeichnet, dass** die rippenförmigen Erhöhungen (10) hohl sind.

4. Gepäckstück oder Brieftasche nach einem der Ansprüche 1 bis 3, **dadurch gekennzeichnet, dass** die Außenschicht aus Kunststoff, Leder oder einem Textilstoff besteht.

5. Gepäckstück oder Brieftasche nach einem der Ansprüche 1 bis 4, **dadurch gekennzeichnet, dass** die Außenschicht (2) mittels einer Klebeschicht (4) auf der Außenfläche (12, 14, 16) aufgebracht ist.

6. Gepäckstück oder Brieftasche nach einem der Ansprüche 1 bis 5, **dadurch gekennzeichnet, dass** die dreidimensionale Erhöhung (10) im Querschnitt eine Dreiecksform aufweist.

7. Gepäckstück oder Brieftasche nach Anspruch 1, **dadurch gekennzeichnet, dass** die mindestens eine auf der Außenfläche (12, 14, 16) angeordnete dreidimensionale Erhebung (11) zwei aufeinander angeordnete und miteinander verbundene Schichten (31, 32, 33 ,34, 35) aufweist.

8. Gepäckstück oder Brieftasche nach Anspruch 7, **dadurch gekennzeichnet, dass** die mindesten zwei Schichten auf die Außenfläche gedruckt sind.

## Claims

1. A piece of luggage or a wallet, comprising
- at least one outer surface (12, 14, 16),
wherein an additional outer layer (2) is arranged on said outer surface (12, 14, 16), said additional outer layer (2) having at least one three-dimensional elevation (10) formed therein by means of a thermoforming process and protruding from said outer surface (12, 14, 16),
**characterized in that**
on said outer surface (12, 14, 16) at least one protrusion (11) which is adapted to the shape of said at least one three-dimensional elevation (10) is arranged, wherein said outer layer (2) is arranged on said outer surface (12, 14, 16) such that said at least one three-dimensional protrusion (11) arranged on said outer surface (12, 14, 16) is arranged beneath said at least one elevation (10) of said outer layer (2).

2. The piece of luggage or wallet according to claim 1, **characterized in that** the at least one three-dimensional elevation (10) is rib-shaped.

3. The piece of luggage or wallet according to claim 1 or 2, **characterized in that** the rib-shaped elevations (10) are hollow.

4. The piece of luggage or wallet according to any one of claims 1 to 3, **characterized in that** the outer layer is made of plastic material, leather or a textile fabric.

5. The piece of luggage or wallet according to any one of claims 1 to 4, **characterized in that** the outer layer (2) is applied on the outer surface (12, 14, 16) by means of an adhesive layer (4).

6. The piece of luggage or wallet according to any one of claims 1 to 5, **characterized in that** the three-dimensional elevation (10) has a triangular cross-sectional shape.

7. The piece of luggage or wallet according to claim 1, **characterized in that** the at least one three-dimensional protrusion (11) arranged on the outer surface (12, 14, 16) comprises two layers (31, 32, 33, 34, 35) stacked one upon the other and joined with each other.

8. The piece of luggage or wallet according to claim 7, **characterized in that** the at least two layers are printed on the outer surface.

## Revendications

1. Bagage ou portefeuille, avec :
- tout au moins une surface extérieure (12, 14, 16) ;
selon lequel une couche extérieure (2) supplémentaire est disposée sur la surface extérieure (12, 14, 16) ;
selon lequel la couche extérieure (2) supplémentaire présente au moins une élévation tridimensionnelle (10), laquelle est mise en place au moyen d'un procédé de thermoformage et laquelle fait saillie de la surface extérieure (12, 14, 16),
**caractérisé en ce qu'**au moins une bosse (11), laquelle est adaptée à la forme de l'au moins une élévation tridimensionnelle (10), est disposée sur la surface extérieure (12, 14, 16) ;
selon lequel la couche extérieure (2) est disposée de telle sorte sur la surface extérieure (12, 14, 16) que l'au moins une bosse tridimensionnelle (11), qui est disposée sur la surface extérieure (12, 14, 16), est disposée au-dessous de l'au moins une élévation tridimensionnelle (10) de la couche extérieure (2).

2. Bagage ou portefeuille selon la revendication 1, **caractérisé en ce que** la tout au moins une élévation tridimensionnelle (10) est conçue en forme de nervure.

3. Bagage ou portefeuille selon la revendication 1 ou 2, **caractérisé en ce que** les élévations (10) en forme de nervures sont creuses.

4. Bagage ou portefeuille selon l'une des revendications 1 à 3, **caractérisé en ce que** la couche extérieure est composée de matière plastique, de cuir ou d'une matière textile.

5. Bagage ou portefeuille selon l'une des revendications 1 à 4, **caractérisé en ce que** la couche extérieure (2) est appliquée sur la surface extérieure (12, 14, 16) au moyen d'une couche adhésive (4).

6. Bagage ou portefeuille selon l'une des revendications 1 à 5, **caractérisé en ce que** l'élévation tridimensionnelle (10) présente une forme triangulaire dans sa section transversale.

7. Bagage ou portefeuille selon la revendication 1, **caractérisé en ce que** l'au moins une bosse tridimensionnelle (11) qui est disposée sur la surface extérieure (12, 14, 16) présente deux couches (31, 32, 33, 34, 35), lesquelles sont disposées l'une sur l'autre et lesquelles sont reliées l'une à l'autre.

8. Bagage ou portefeuille selon la revendication 7, **caractérisé en ce que** les au moins deux couches sont pressées sur la surface extérieure.
